# EUROPEAN PATENT APPLICATION

(11) **EP 4 760 132 A1**
(43) Date of publication of application: **17.06.2026**
(21) Application number: 24851083.6
(22) Date of filing: 08.08.2024
(51) Int. Cl.: F16K 31/06

(54) **ELECTROMAGNETIC VALVE**

(30) Priority: 08.08.2023 CN 202322126981 U
(71) Applicant: Zhejiang Dunan Artificial Environment Co., Ltd., Shaoxing Zhejiang 311800 (CN)
(72) Inventor: XU, Mingjie, Shaoxing, Zhejiang 311800 (CN); WANG, Fugang, Shaoxing, Zhejiang 311800 (CN); SHA, Haijian, Shaoxing, Zhejiang 311800 (CN)
(74) Representative: Studio Torta S.p.A.
(86) International application number: PCT/CN2024/110609
(87) International publication number: WO 2025/031438

(57) **Abstract**

An electromagnetic valve, comprising a first iron core (100) and a second iron core (200), wherein a plurality of first noise reduction pads (300) are provided between the first iron core (100) and the second iron core (200), and the plurality of first noise reduction pads (300) are circumferentially arranged at intervals along the surface, which is in contact with the second iron core (200), of the first iron core (100).

## Description

The present disclosure claims priority to Chinese patent application No. 202322126981.1, filed on August 8, 2023, which is incorporated herein by reference in its entirety.

### TECHNICAL FIELD

The present disclosure relates to the technical field of valves, particularly to an electromagnetic valve.

### BACKGROUND

In the related art, electromagnetic valves are typically categorized into normally closed electromagnetic valves and normally open electromagnetic valves. For a normally closed electromagnetic valve, a first iron core is attracted with a second iron core when a coil is energized, and the first iron core collides with the second iron core during attraction, thereby producing noise.

For a normally open electromagnetic valve, when a coil is energized, a first iron core is attracted with a second iron core, and the first iron core collides with the second iron core during attraction, thereby generating noise; when the coil is de-energized, the first iron core moves upward under an elastic force of a reset spring, thereby colliding with an end cap and producing noise.

### SUMMARY

The present disclosure aims to provide an electromagnetic valve, to solve the technical problem that noise is produced due to collision between the first iron core and the second iron core during operation of the electromagnetic valve in the related art.

According to an aspect of the present disclosure, the present disclosure provides an electromagnetic valve, including a first iron core and a second iron core. A plurality of first noise reduction pads are provided between the first iron core and the second iron core, and the plurality of first noise reduction pads are spaced apart in a circumferential direction of a surface where the first iron core is in contact with the second iron core.

According to an embodiment of the present disclosure, at least a part of the plurality of first noise reduction pads are injection-molded onto a surface of the first iron core, or all of the plurality of first noise reduction pads are injection-molded onto a surface of the second iron core.

According to an embodiment of the present disclosure, two first noise reduction pads are provided, with one of the first noise reduction pads disposed on a surface of the first iron core facing the second iron core and the other of the first noise reduction pads disposed on a surface of the second iron core facing to the first iron core.

According to an embodiment of the present disclosure, the plurality of first noise reduction pads are spaced apart in a circumferential direction of an end face of the first iron core facing the second iron core.

According to an embodiment of the present disclosure, the end face of the first iron core facing the second iron core is provided with a plurality of first grooves at uniform intervals, a number of the first grooves is equal to a number of the first noise reduction pads, and the first noise reduction pads are disposed in the first grooves.

According to an embodiment of the present disclosure, one end of the first iron core close to the second iron core is provided with a frustum-shaped structure, one end of the second iron core close to the first iron core is provided with a recess fitted with the frustum-shaped structure, and the first grooves are disposed on a circumferential surface of the frustum-shaped structure.

According to an embodiment of the present disclosure, each of the first noise reduction pads has an elongated shape, and two ends of each of the first noise reduction pads are arranged in a generatrix direction of the frustum-shaped structure.

According to an embodiment of the present disclosure, a surface of the first iron core in contact with the second iron core is an annular plane, the first noise reduction pads are arc-shaped, and two ends of each of the first noise reduction pads are arranged in a circumferential direction of the annular plane.

According to an embodiment of the present disclosure, the plurality of first noise reduction pads are spaced apart in a circumferential direction of an end face of the second iron core facing the first iron core.

According to an embodiment of the present disclosure, an end face of the second iron core facing the first iron core is provided with a plurality of second grooves at uniform intervals. The number of the second grooves is equal to the number of first noise reduction pads, with each first noise reduction pad disposed in the corresponding second groove.

According to an embodiment of the present disclosure, a part of the first noise reduction pads are spaced apart in a circumferential direction of an end face of the first iron core facing the second iron core, and another part of the noise reduction pads are spaced apart in a circumferential direction of an end face of the second iron core facing the first iron core.

According to an embodiment of the present disclosure, an end of the first iron core away from the second iron core is provided with a plurality of second noise reduction pads, the plurality of second noise reduction pads are spaced apart in a circumferential direction of the end face of the first iron core away from the second iron core, and the second noise reduction pads are capable of being in contact with the end cap.

According to an embodiment of the present disclosure, the second noise reduction pads are injection-molded on a surface of the first iron core away from the second iron core.

According to an embodiment of the present disclosure, the end face of the first iron core away from the second iron core is provided with a plurality of third grooves at uniform intervals. The number of the third grooves is equal to the number of the second noise reduction pads. The second noise reduction pads are disposed in the third grooves.

According to an embodiment of the present disclosure, the end face of the first iron core away from the second iron core is an annular plane, each second noise reduction pad is arc-shaped, and two ends of the second noise reduction pad are arranged in a circumferential direction of the second annular plane.

The present disclosure mainly has the following beneficial effects.

The electromagnetic valve according to the present disclosure includes the first iron core and the second iron core, the plurality of first noise reduction pads are disposed between the first iron core and the second iron core, and the plurality of first noise reduction pads are spaced apart in the circumferential direction of the surface where the first iron core and the second iron core are in contact with each other.

Based on this structure, for the electromagnetic valve according to the present disclosure, by the plurality of first noise reduction pads disposed between the first iron core and the second iron core, a cushioning effect can be provided when the first iron core collides with the second iron core, thereby reducing impact noise. Moreover, the plurality of first noise reduction pads are spaced apart in the circumferential direction of the surface where the first iron core is in contact with the second iron core, each first noise reduction pad has a small volume and is disposed on the surface of either the first iron core or the second iron core, and less soft magnetic material needs to be removed from either the first iron core or the second iron core, resulting in less electromagnetic force attenuation, and ensuring the performance of both the first iron core and the second iron core.

### BRIEF DESCRIPTION OF THE DRAWINGS

The above and other features and advantages of the present disclosure will become clearer by describing exemplary embodiments in detail with reference to the accompanying drawings.
FIG. 1 is a schematic structural view of an electromagnetic valve according to an embodiment of the present disclosure;
FIG. 2 is a schematic structural view of a first iron core in the electromagnetic valve shown in FIG. 1;
FIG. 3 is a schematic structural view of the first iron core shown in FIG. 2 cooperating with a first noise reduction pad;
FIG. 4 is another schematic structural view of an electromagnetic valve according to an embodiment of the present disclosure;
FIG. 5 is a schematic structural view of a first iron core in the electromagnetic valve shown in FIG. 4;
FIG. 6 is a schematic structural view of the first iron core shown in FIG. 5 cooperating with a first noise reduction pad;
FIG. 7 is a schematic structural view of the first iron core in the electromagnetic valve shown in FIG. 4 from another angle of view;
FIG. 8 is a schematic structural view of the first iron core shown in FIG. 7 cooperating with a second noise reduction pad.

Reference numerals are as follows: 100- first iron core; 101- first groove; 102- frustum-shaped structure; 103a- first annular plane; 103b- second annular plane; 104- third groove; 200- second iron core; 300- first noise reduction pad; 400- second noise reduction pad; 500- end cap.

### DETAILED DESCRIPTION

Technical solutions of the present disclosure will be clearly and completely described below in combination with embodiments. Obviously, the embodiments described herein are only part of rather than all of embodiments of the present disclosure. Based on the embodiments of the present disclosure, all other embodiments obtained by those skilled in the art without involving creative effort fall within the protection scope of the present disclosure.

In the description of the present disclosure, it should be noted that terms such as "central," "up," "down," "left," "right," "vertical," "horizontal," "inner," "outer," or the like indicate the orientation or positional relationship based on the orientation or positional relationship shown in the accompanying drawings. These terms are used solely for the purpose of facilitating the description of the present disclosure and simplifying the description, but are not intended to indicate or imply that the devices or the elements referred to must have a specific orientation, or be constructed and operated in a specific orientation. Therefore, they should not be construed as limiting the scope of the present disclosure. Furthermore, terms "first," "second" and "third" are used solely for descriptive purposes, but should not be construed as indicating or implying relative importance.

In the description of the present disclosure, it should be noted that unless otherwise explicitly specified and limited, terms such as "mounted," "coupled," and "connected" should be interpreted broadly. For example, they may refer to fixed connections, detachable connections, or integral connections; they may refer to mechanical connections or electrical connections; they may be direct connections or indirect connections through intervening structures; and they may be internal communications between two elements. Those skilled in the art will understand the specific meaning of the above terms in the context of the present disclosure according to the specific circumstances.

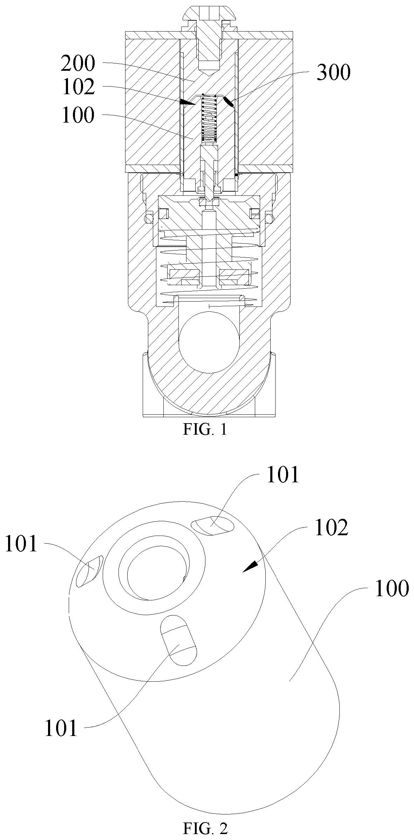

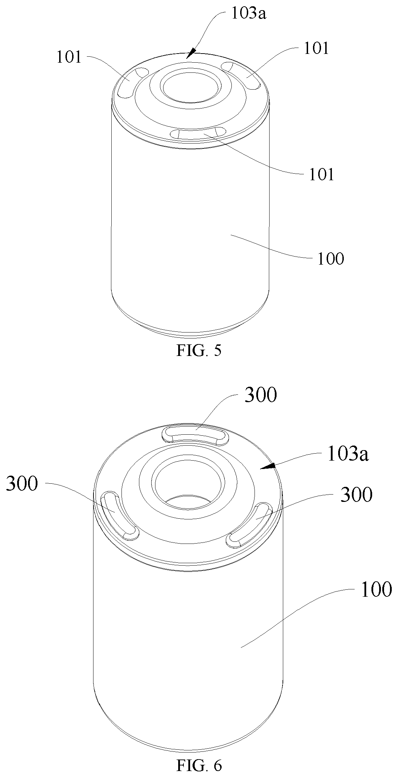

Referring to FIGS. 1 to 8, this embodiment provides an electromagnetic valve including a first iron core 100 and a second iron core 200. A plurality of first noise reduction pads 300 are provided between the first iron core 100 and the second iron core 200. The plurality of first noise reduction pads 300 are spaced apart in a circumferential direction of a surface where the first iron core 100 is in contact with the second iron core 200.

Based on this structure, for the electromagnetic valve according to this embodiment, by the plurality of first noise reduction pads 300 disposed between the first iron core 100 and the second iron core 200, a cushioning effect can be provided when the first iron core 100 collides with the second iron core 200, thereby reducing impact noise. Moreover, the plurality of first noise reduction pads 300 are spaced apart in the circumferential direction of the surface where the first iron core 100 is in contact with the second iron core 200, each first noise reduction pad 300 has a small volume and is disposed on a surface of either the first iron core or the second iron core, and less soft magnetic material needs to be removed from either the first iron core or the second iron core, resulting in less electromagnetic force attenuation, and ensuring the performance of both the first iron core 100 and the second iron core 200.

It should be understood that the plurality of first noise reduction pads 300 disposed between the first iron core 100 and the second iron core 200 may refer to that the plurality of first noise reduction pads 300 are completely disposed on a surface of the first iron core 100 close to the second iron core 200, or may refer to that the plurality of first noise reduction pads 300 are completely disposed on a surface of the second iron core 200 close to the first iron core 100, or may refer to that a part of the first noise reduction pads 300 are disposed on the surface of the first iron core 100 close to the second iron core 200, while another part of the first noise reduction pads 300 are disposed on the surface of the second iron core 200 close to the first iron core 100, as long as the cushioning effect may be realized to reduce impact noise when the first iron core 100 collides with the second iron core 200.

It should be understood that the surface where the first iron core 100 is in contact with the second iron core 200 refer to a surface where the first iron core 100 is in indirect contact with the second iron core 200 through the first noise reduction pads 300. The plurality of first noise reduction pads 300 spaced apart in the circumferential direction of the surface where the first iron core 100 is in contact with the second iron core 200 represents a positional relationship of the plurality of first noise reduction pads 300 when the first iron core 100 and the second iron core 200 are in an attracted state. It can be understood that projections of the plurality of first noise reduction pads 300 in the surface where the first iron core 100 is in contact with the second iron core 200 are spaced apart in the circumferential direction of the surface where the first iron core 100 is in contact with the second iron core 200. The surface where the first iron core 100 is in contact with the second iron core 200 refer to a surface where the first iron core 100 and the second iron core 200 are in contact with each other under the attracted state of the first iron core and the second iron core. Since surfaces of the first iron core and the second iron core in contact with each other substantially overlap with each other and have substantially identical contour shapes in the attracted state, even when the number of first noise reduction pads 300 is two (e.g., only one first noise reduction pad 300 is provided on each of the first iron core 100 and the second iron core 200), it can be considered that the two first noise reduction pads 300 are spaced apart in the circumferential direction of the surfaces of the first iron core 100 and the second iron core 200 in contact with each other when they are in the attracted state.

The contour shapes of the surfaces of the first iron core 100 and the second iron core 200 in contact with each other are substantially identical. For example, the surfaces of the first iron core 100 and the second iron core 200 in contact with each other may both be annular planes or may both be circumferential inclined surfaces of a frustum-shaped structure 102.

In an embodiment, at least a part of the plurality of first noise reduction pads 300 are injection-molded onto a surface of the first iron core 100, or all of the plurality of first noise reduction pads 300 are injection-molded onto a surface of the second iron core 200.

Specifically, when all of the plurality of first noise reduction pads 300 are disposed on the surface of the first iron core 100 close to the second iron core 200, all of the plurality of first noise reduction pads 300 are injection-molded onto the surface of the first iron core 100.

When all of the plurality of first noise reduction pads 300 are disposed on the surface of the second iron core 200 close to the first iron core 100, all of the plurality of first noise reduction pads 300 are injection-molded onto the surface of the second iron core 200.

When a part of the first noise reduction pads 300 are disposed on the surface of the first iron core 100 close to the second iron core 200, this part of the first noise reduction pads 300 are injection-molded onto the surface of the first iron core 100, while another part of the first noise reduction pads 300 are injection-molded onto the surface of the second iron core 200.

For example, the first noise reduction pads 300 are soft rubber pads and are molded onto the surface of either the first iron core 100 or the second iron core 200 by a vulcanization process. Specifically, the first noise reduction pads 300 are molded onto the surface of either the first iron core 100 or the second iron core 200 by using an injection mold. The vulcanization process may also be replaced by other rubber molding methods for fixation to metal. Certainly, the injection-molded rubber first noise reduction pads 300 may also be fixed onto the surface of either the first iron core 100 or the second iron core 200.

In a possible design, the plurality of first noise reduction pads 300 are spaced apart in a circumferential direction of an end face of the first iron core 100 facing the second iron core 200.

In this possible design, the end face of the first iron core 100 facing the second iron core 200 is provided with a plurality of first grooves 101 at uniform intervals. The number of first grooves 101 is equal to the number of first noise reduction pads 300, with each first noise reduction pad 300 disposed in the corresponding first groove 101.

For example, as shown in FIG. 2, the end face of the first iron core 100 facing the second iron core 200 is provided with three first grooves 101 spaced apart uniformly in its circumferential direction. The number of the first noise reduction pads 300 is also three. One first noise reduction pad 300 is injection-molded in each first groove 101, such that the three first noise reduction pads 300 are evenly spaced apart in the circumferential direction of the end face of the first iron core 100 facing the second iron core 200, which may allow for a smoother attraction process and further reduce noise generated during collision.

Certainly, the plurality of first noise reduction pads 300 may be arranged at non-uniform intervals in the circumferential direction of the end face of the first iron core 100 facing the second iron core 200. Correspondingly, the plurality of first grooves 101 may be arranged at non-uniform intervals in the circumferential direction of the end face of the first iron core 100 facing the second iron core 200.

In some embodiments, as shown in FIGS. 1 and 2, an end of the first iron core 100 facing the second iron core 200 has the frustum-shaped structure 102; an end of the second iron core 200 facing the first iron core 100 is provided with a recess fitted with the frustum-shaped structure 102; and the first grooves 101 are disposed on the circumferential inclined surface of the frustum-shaped structure 102.

The circumferential inclined surface of the frustum-shaped structure 102 and a circumferential inclined side wall of the recess have substantially identical contours.

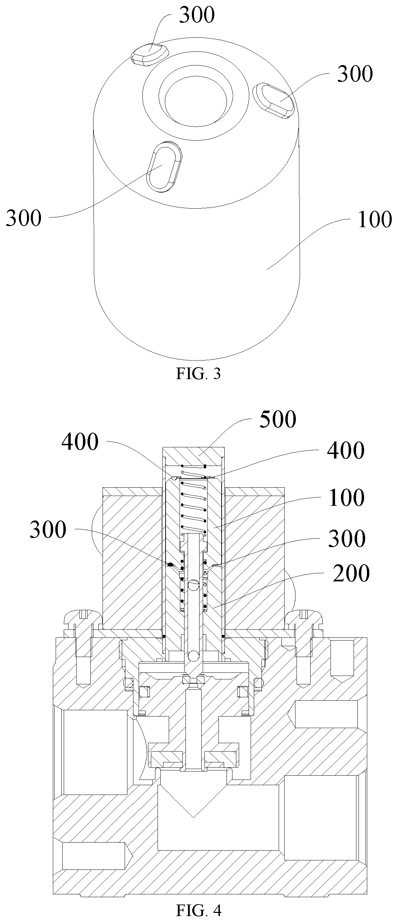

In this possible design, as shown in FIG. 3, each first noise reduction pad 300 has an elongated shape, and two ends of the first noise reduction pad 300 are arranged in a generatrix direction of the frustum-shaped structure 102. That is, a length direction of the first noise reduction pad 300 is consistent with the generatrix direction of the frustum-shaped structure 102.

For example, the two ends of the first noise reduction pad 300 have arc-shaped curved surfaces. Correspondingly, groove walls at two ends of the first groove 101 in its length direction are also arc-shaped. This arrangement can enhance the strength of connection between the first noise reduction pad 300 and the first iron core 100 during the injection molding process.

In other embodiments, as shown in FIGS. 4 to 6, the surface of the first iron core 100 in contact with the second iron core 200 is an annular plane, referred as a first annular plane 103a. The first noise reduction pad 300 is arc-shaped, and two ends of the first noise reduction pad 300 are arranged in a circumferential direction of the first annular plane.

It should be noted that the shape, the quantity, and the arrangement of the first noise reduction pads 300 are not limited to the above configurations, and other configurations may be selected according to actual production and processing requirements.

In a second possible design, the plurality of first noise reduction pads 300 are spaced apart in a circumferential direction of an end face of the second iron core 200 facing the first iron core 100.

In the second possible design, the end face of the second iron core 200 facing the first iron core 100 is provided with a plurality of second grooves (not shown in the drawings) at uniform intervals. The number of the second grooves is equal to the number of first noise reduction pads 300, with each first noise reduction pad 300 disposed in the corresponding second groove.

It should be noted that the quantity, the structure, and the arrangement of the second grooves are identical to those of the first grooves 101 and will not be described in detail herein.

In a third possible design, a part of the plurality of first noise reduction pads 300 are spaced apart in the circumferential direction of the end face of the first iron core 100 facing the second iron core 200, while another part of the noise reduction pads are spaced apart in the circumferential direction of the end face of the second iron core 200 facing the first iron core 100.

In the third possible design, the number of first noise reduction pads 300 is at least four, with two first noise reduction pads 300 spaced apart in the circumferential direction of the end face of the first iron core 100 facing the second iron core 200, and another two first noise reduction pads 300 spaced apart in the circumferential direction of the end face of the second iron core 200 facing the first iron core 100.

For example, the end face of the first iron core 100 facing the second iron core 200 is provided with two first grooves 101 spaced apart uniformly, with one first noise reduction pad 300 injection-molded in each first groove 101; and the end face of the second iron core 200 facing the first iron core 100 is provided with two second grooves spaced apart uniformly, with one first noise reduction pad 300 injection-molded in each second groove.

It should be noted that the number of first noise reduction pads 300 may also be two, with one of the first noise reduction pads 300 disposed on the surface of the first iron core 100 facing the second iron core 200, and the other of the first noise reduction pads 300 disposed on the surface of the second iron core 200 facing the first iron core 100. The projections of the two first noise reduction pads 300 on the surfaces where the first iron core 100 and the second iron core 200 are in contact with each other are spaced apart in the circumferential direction of the surfaces where the first iron core 100 and the second iron core 200 are in contact with each other.

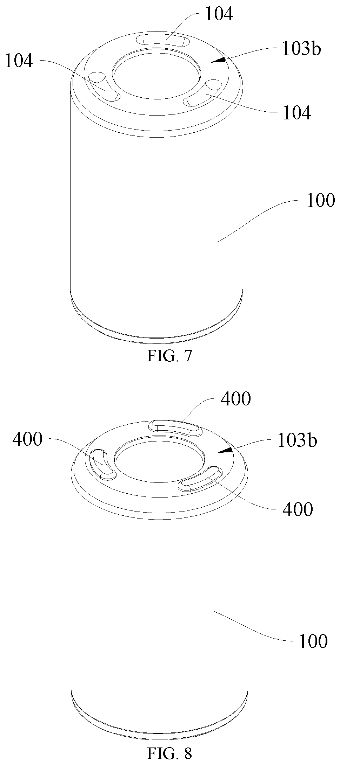

In an embodiment, as shown in FIGS. 4 and 8, a plurality of second noise reduction pads 400 are provided on an end face of the first iron core 100 away from the second iron core 200. The plurality of second noise reduction pads 400 are spaced apart in a circumferential direction of the end face of the first iron core 100 away from the second iron core 200. For example, the electromagnetic valve further includes an end cap 500, and the second noise reduction pads 400 are capable of being in contact with the end cap 500.

For example, for a normally open electromagnetic valve, when a coil is energized, the first iron core 100 is attracted with the second iron core 200, and the first noise reduction pads 300 can reduce noise generated during the collision between the first iron core 100 and the second iron core 200; and when the coil is de-energized, the first iron core 100 moves away from the second iron core 200 under an elastic force of a reset spring until it collides with the end cap 500, and noise generated during the collision between the first iron core 100 and the end cap 500 can be reduced by the second noise reduction pads 400.

In an embodiment, the second noise reduction pads 400 are injection-molded onto the surface of the first iron core 100 away from the second iron core 200.

For example, the second noise reduction pads 400 are soft rubber pads molded onto the surface of the first iron core 100 away from the second iron core 200 by a vulcanization process.

In an embodiment, the end face of the first iron core 100 away from the second iron core 200 is provided with a plurality of third grooves 104 at uniform intervals. The number of the third grooves 104 is equal to the number of the second noise reduction pads 400. The second noise reduction pads 400 are disposed in the third grooves 104.

For example, as shown in FIGS. 7 and 8, the end face of the first iron core 100 away from the second iron core 200 is provided with three third grooves 104 spaced apart uniformly. The number of the second noise reduction pads 400 is also three. One second noise reduction pad 400 is injection-molded in each third groove, such that the three second noise reduction pads 400 are spaced apart uniformly in the circumferential direction of the end face of the first iron core 100 away from the second iron core 200, thereby further reducing noise generated during the collision between the first iron core 100 and the end cap 500.

Certainly, the plurality of second noise reduction pads 400 may be arranged at non-uniform intervals in the circumferential direction of the end face of the first iron core 100 away from the second iron core 200. Correspondingly, the plurality of third grooves may be arranged at non-uniform intervals in the circumferential direction of the end face of the first iron core 100 away from the second iron core 200.

In an embodiment, as shown in FIG. 7, the end face of the first iron core 100 away from the second iron core 200 is an annular plane, referred as a second annular plane 103b. As shown in FIG. 8, each second noise reduction pad 400 is arc-shaped, and two ends of the second noise reduction pad 400 are arranged in a circumferential direction of the second annular plane.

For example, end faces of the two ends of the second noise reduction pad 400 are arc-shaped curved surfaces. Correspondingly, groove walls at two ends of the second groove in its length direction are also arc-shaped. This arrangement can enhance the strength of connection between the second noise reduction pad 400 and the first iron core 100 during the injection molding process.

It should be noted that the shape, the quantity, and the arrangement of the second noise reduction pads 400 are not limited to the above configuration, and other configurations may be selected according to actual production and processing requirements.

It should be noted that the first noise reduction pads 300 may be directly disposed on the surface of the first iron core 100 without any modification to the surface of the first iron core 100, i.e., no groove structure is required. The first noise reduction pads 300 may also be directly disposed on the surface of the second iron core 200 without any modification to the surface of the second iron core 200, i.e., no groove structure is required.

Finally, it should be noted that the above embodiments are merely used to illustrate rather than limit the technical solutions of the present disclosure. Although the present disclosure has been described in detail with reference to the foregoing embodiments, those skilled in the art should understand that they may modify the technical solutions described in the aforementioned embodiments, or equivalently replace some or all technical features therein, and such modifications or replacements do not cause the corresponding technical solutions to depart from the scope of the technical solutions in the embodiments of the present disclosure.

## Claims

1. An electromagnetic valve, comprising a first iron core and a second iron core, wherein a plurality of first noise reduction pads are provided between the first iron core and the second iron core, and the plurality of first noise reduction pads are spaced apart in a circumferential direction of a surface where the first iron core is in contact with the second iron core.

2. The electromagnetic valve according to claim 1, wherein at least a part of the plurality of first noise reduction pads are injection-molded onto a surface of the first iron core, or all of the plurality of first noise reduction pads are injection-molded onto a surface of the second iron core.

3. The electromagnetic valve according to claim 1, wherein the plurality of first noise reduction pads are spaced apart in a circumferential direction of an end face of the first iron core facing the second iron core.

4. The electromagnetic valve according to claim 3, wherein the end face of the first iron core facing the second iron core is provided with a plurality of first grooves at uniform intervals, a number of the first grooves is equal to a number of the first noise reduction pads, and the first noise reduction pads are disposed in the first grooves.

5. The electromagnetic valve according to claim 4, wherein one end of the first iron core close to the second iron core is provided with a frustum-shaped structure, one end of the second iron core close to the first iron core is provided with a recess fitted with the frustum-shaped structure, and the first grooves are disposed on a circumferential inclined surface of the frustum-shaped structure.

6. The electromagnetic valve according to claim 5, wherein each of the first noise reduction pads has an elongated shape, and two ends of each of the first noise reduction pads are arranged in a generatrix direction of the frustum-shaped structure.

7. The electromagnetic valve according to claim 3, wherein a surface of the first iron core in contact with the second iron core is an annular plane, the first noise reduction pads are arc-shaped, and two ends of each of the first noise reduction pads are arranged in a circumferential direction of the annular plane.

8. The electromagnetic valve according to claim 1, wherein the plurality of first noise reduction pads are spaced apart in a circumferential direction of an end face of the second iron core facing the first iron core.

9. The electromagnetic valve according to claim 1, wherein two first noise reduction pads are provided, with one of the first noise reduction pads disposed on a surface of the first iron core facing the second iron core and the other of the first noise reduction pads disposed on a surface of the second iron core facing to the first iron core.

10. The electromagnetic valve according to claim 1, wherein a part of the first noise reduction pads are spaced apart in a circumferential direction of an end face of the first iron core facing the second iron core, and another part of the noise reduction pads are spaced apart in a circumferential direction of an end face of the second iron core facing the first iron core.

11. The electromagnetic valve according to any one of claims 1 to 10, wherein an end of the first iron core away from the second iron core is provided with a plurality of second noise reduction pads, and the plurality of second noise reduction pads are spaced apart in a circumferential direction of the end face of the first iron core away from the second iron core.

12. The electromagnetic valve according to claim 11, wherein the second noise reduction pads are injection-molded on a surface of the first iron core away from the second iron core.
